# EUROPÄISCHE PATENTSCHRIFT

(11) **EP 0 325 188 B1**
(45) Veröffentlichungstag und Bekanntmachung des Hinweises auf die Patenterteilung: **28.12.1994**
(21) Anmeldenummer: 89100660.3
(22) Anmeldetag: 16.01.1989
(51) Int. Cl.: B01D 37/02, B01D 39/08, B01D 39/14

(54) **Verfahren zur Verkleinerung der Poren eines Filtermediums für Getränke**
Method for the reduction of the pore-size of a filter medium for beverages
Procédé de diminution de la taille des pores d'un agent filtrant pour boissons

(30) Priorität: 18.01.1988 DE 3801215; 15.06.1988 DE 3820393
(43) Veröffentlichungstag der Anmeldung: 26.07.1989
(73) Patentinhaber: STABIFIX BRAUEREI-TECHNIK GMBH & CO. OHG, D-82166 Gräfelfing (DE)
(72) Erfinder: Raible, Karl, Dr., D-8032 Gräfelfing (DE)
(74) Vertreter: Lederer, Franz, Dr.

(56) Entgegenhaltungen:
- EP-A- 0 031 522
- DE-A- 2 034 339
- DE-A- 2 133 906
- DE-A- 3 304 437
- GB-A- 1 191 932
- GB-A- 1 539 847
- SU-A- 292 463
- US-A- 3 878 300

## Beschreibung

Die Erfindung betrifft ein Verfahren zur Verkleinerung der Poren eines Filtermediums für Getränke, vorzugsweise Bier.

Der Filtrationsprozeß in der Getränkeindustrie hat die Aufgabe, Trübungsteilchen und Mikroorganismen aus dem Getränk herauszufiltrieren, bevor dieses zur Abfüllung kommt. Er spielt in der Getränkeindustrie eine wesentliche Rolle, weil der Verbraucher ein brillant klares Getränk erwartet. Die scharfe Filtration ist aber auch aus Gründen der mikrobiologischen Haltbarkeit erforderlich. Es müssen sämtliche Mikroorganismenzellen aus dem Getränk entfernt sein. Dies ist nur gewährleistet, wenn völlig brilliant filtriert worden ist.

Für die Filtration der Getränke sind bereits viele Filterverfahren bekannt. Eine Gruppe dieser vorbekannten Verfahren ist dadurch gekennzeichnet, daß das Getränk durch einen vorgefertigten Filterkuchen z.B. aus Cellulose oder durch eine vorgefertigte Filterschicht aus Fasermaterialien verschiedener Herkunft hindurchgeleitet wird. Die andere Gruppe von vorbekannten Filterverfahren ist dadurch gekennzeichnet, daß Anschwemmfiltration praktiziert wird. Hierbei dosiert man feinpulverige Filtermaterialien in den Flüssigkeitsstrom. Die zudosierten feinteiligen Filterhilfsstoffe werden anschließend auf Sieben oder Faserschichten wieder aus dem Flüssigkeitsstrom entfernt. Für die Anschwemmfiltration benützt man hauptsächlich Kieselgur oder Cellulosepulver oder Gemische von beiden. So offenbart die EP-A2-31 522 ein Filterhilfsmittel für die Filtration von Getränken, insbesondere Bier, nach dem Anschwemm-Filtrationsverfahren bestehend aus Fasern aus praktisch reiner Kieselsäure, gegebenenfalls in Mischung mit Kieselgur.

Sowohl bei der Anschwemmfiltration als auch bei der Filtration durch vorgefertigte Filtermedien ist die Porengröße abhängig vom verwendeten Filtermaterial, seiner Teilchenfeinheit und eventuell seiner Feinstruktur. Besonders vorteilhaft ist bei der Filtration von

Getränken der Gebrauch von Kieselgur als Filtermedium, weil man durch Auswahl geeigneter Kieselgursorten die Möglichkeit hat, sowohl die Durchflußrate als auch die Schärfe der Filtration, den jeweiligen Erfordernissen anzupassen. Gleichwohl kommt es bei manchen Anwendungsfällen vor, daß selbst die feinste Kieselgur Trübungsbestandteile des Getränks nicht zurückhalten kann.

Die "Poren" im Sinne der Ausführungen können z.B. Feinstrukturen innerhalb der einzelnen, das Filtermedium bildenden Partikel sein (z.B. bei Kieselgur) als auch Zwischenräume beispielsweise zwischen Fasern, die das Filtermedium bilden.

Cellulosefasern, die ebenfalls für die Getränkefiltration Verwendung finden, bilden gut durchlässige Filterschichten, sie eignen sich aber in vielen Fällen nicht zur scharfen Filtration, weil sie feinteilige Trübungsstoffe nicht zurückhalten können. Cellulose wurde deshalb früher mit Asbestfasern verdichtet. Da auf die Verwendung von Asbest aus gesundheitlichen Gründen verzichtet werden muß, versucht man, durch Zumischung von Kieselgur die Filtrationsschärfe zu erhöhen. Die Verwendung allein von Cellulose hätte den Vorteil, daß das Filtermedium nach dem Gebrauch verfüttert werden könnte, indem man es beispielsweise Biertrebern zumischt. Dies ist jedoch nicht möglich, wenn in der Cellulose auch Kieselgur in einer nennenswerten Menge enthalten ist.

Es ist auch schon vorgeschlagen worden, als Filtrationsmedium für die Anschwemmfiltration Stärke zu verwenden. Dieser Prozeß hätte ebenfalls den Vorzug, daß das Filtermedium nach dem Gebrauch verfüttert werden kann, daß also die Entsorgung aus der Brauerei keine besonderen Schwierigkeiten macht, wie dies z.B. bei Kieselgur der Fall ist. Auch mit Stärke kann jedoch keine scharfe Filtration erreicht werden.

Als Filterhilfsmittel für die Anschwemmfiltration sind auch schon Kieselsäurehydrogele in feinpulvriger Form empfohlen worden. Das Kieselsäurehydrogel dient an sich der Eiweißstabilisierung vom Bier. Es hat die Aufgabe, instabile Kolloide durch Adsorption aus dem Bier zu entfernen. Das geschieht praktisch während der Filtration des Bieres, wenn man das Hydrogel zusammen mit der Filtrationskieselgur dem Bier zudosiert und im Filter wieder abscheidet. Hiervon ausgehend wird diskutiert, die Anschwemmfiltration nur mit Kieselsäurehydrogel durchzuführen und auf die Kieselgur oder sonstige Filterhilfsmittel zu verzichten. Es ergeben sich hierbei aber beachtliche Schwierigkeiten. Wird ein Hydrogelpulver eingesetzt, das zu grob ist, dann erreicht man nicht die erforderliche Klarheit des Filtrates. Wird zu fein vermahlen, verstopft sich der Filter. Man müßte also praktisch für jedes Bier und womöglich auch noch für jeden Vorklärungsgrad speziell vermahlenes Kieselsäurehydrogel bereitstellen.

Als Filtermaterial kämen auch pulverförmige Kunststoffprodukte in Betracht, die nicht für die Filtration sondern für die Adsorption von polyphenolischen Verbindungen aus Getränken entwickelt worden sind, wie z.B. Polyvinylpolypyrrolidon oder Polyamide. Sie lassen sich in Anschwemmfiltern handhaben wie Kieselgur, besitzen aber als Filterhilfsmittel nur geringen Wert, weil sie keine scharfe Filtration erlauben.

Schließlich kämen als Material für Filtermedien auch Polymere, vor allem faserförmige Polymere in Betracht, z.B. Nylon- oder Perlonfasern, Polyacrylnitrilfasern oder auch Hohlfasern aus Polyacrylnitril. Voraussetzung für den Gebrauch dieser Fasern wäre nur, daß sie vor ihrem Einsatz freigewaschen sind von in dem zu filtrierenden Getränk löslichen Stoffen. Der Vorteil dieser polymeren Filtermedien läge darin, daß sie nach der Filtration durch einfache Spülung mit beispielsweise verdünnter Natronlauge regeneriert werden könnten. Ihr Einsatz scheitert aber ebenfalls daran, daß sich keine scharfe Filtration erreichen läßt.

Die Anwendung von Kieselsol zur Getränke- und auch zur Bierklärung ist bekannt, z.B. durch die DE-OS 2 133 906, die US-PS 3 878 300, die DE-OS 3 304 437 und zahlreiche andere Druckschriften. Bei all diesen vorbekannten Verfahren wird das Kieselsol jedoch in einem grundsätzlich anderen Prozeß und auch mit anderem Wirkungsmechanismus eingesetzt.

Diesen bekannten Verfahren liegt zugrunde, daß man durch Zugabe von Kieselsol zum Getränk eine Ausflockung von feinsverteiltem Kieselsäurehydrogel (SiO₂-Sekundärteilchen) erzeugt, das gegenüber Inhaltsstoffen des Getränks adsorbierend wirken soll. Im Falle des Bieres will man kälteinstabile Eiweiß-Gerbstoffverbindungen an der entstehenden Kieselsäureausfällung adsorbieren und diese dann zusammen mit der Kieselsäureausfällung aus dem Bier entfernen. Das geschieht gewöhnlich durch Sedimentation oder Zentrifugation.

Bei dem Verfahren der US-PS 3 878 300 wird ein instabiles Kieselsäurekoagulat zur Adsorption von Kältetrübungssubstanzen eingesetzt, das speziell hergestellt wird und vor seiner Zugabe zum Getränk einem Alterungsprozeß unterworfen wird.

Damit der angestrebte Zweck erreicht wird, muß man allein für den Adsorptionsprozeß eine Reaktionszeit von mehreren Stunden einhalten. Die SiO₂-Abscheidung durch Sedimentation erfordert zusätzlich einige Tage, je nach der Höhe der Flüssigkeitssäule. Außerdem sind bei diesen bekannten Verfahren viel größere Mengen SiO₂ erforderlich.

Die vorbekannten Verfahren haben im Fall des Bieres die erwähnte eiweißstabilisierende Wirkung. Im Falle der DE-OS 3 304 437 wird diese Wirkung durch Bentonit zusätzlich verstärkt. Diese Verfahren bewirken auch eine gewisse Vorklärung des Bieres vor seiner Filtration, die sich aber auf die Entfernung nur der Trübungsstoffe beschränkt, die durch elektrischen Ladungsausgleich an das aus Kieselsol entstehende Hydrogel adsorbiert und damit sedimentiert werden. Andere Trübungsstoffe unterschiedlicher Art und Herkunft lassen sich nicht an SiO₂-Hydrogel adsorbieren und können durch die bekannten Verfahren auch nicht aus dem Bier entfernt werden.

Hiervon ausgehend liegt der Erfindung die Aufgabe zugrunde, ein Verfahren der eingangs angegebenen Art vorzuschlagen, durch das die Porengröße eines Filtermediums auf einfache Weise verkleinert und den Bedürfnissen angepaßt werden kann.

Erfindungsgemäß wird diese Aufgabe durch ein Verfahren gelöst, wobei dem zu filtrierenden Getränk bei kontinuierlicher Prozeßführung stromaufwärts des vom Getränk durchströmten Filtermediums oder in einem Chargenprozeß dem in einem Tank befindlichen Getränk ein stabilisiertes Kieselsol in einer solchen Menge und derart gesteuert zugesetzt wird, daß die Kieselsäureausfällung, also der Übergang von SiO₂-Primärteilchen in SiO₂-Sekundärteilchen, stattgefunden hat, bevor das Getränk das Filtermedium verlassen hat, und die entstandene Kieselsäureausfällung die Poren verkleinert, ohne sie zu verschließen, wobei für eine gleichmäßige Verteilung der Kieselsäureausfällung im zu filtrierenden Getränk gesorgt wird.

Die Erfindung wird praktiziert im Rahmen eines Anschwemmfiltrationsverfahrens, wobei das Kieselsol in einer solchen Menge und in einem solchen Verhältnis zum Filtermedium zugesetzt wird, daß eine ausreichende Filterwirkung erreicht wird, ohne daß die Poren des Filtermediums zu eng werden oder sich völlig verlegen.

Wesentlich ist bei diesem Prozeß, daß zwischen Kieselsolzugabe und Filtrationsprozeß ausreichend Zeit besteht zur Kieselsäureausflockung, d.h. zur Bildung von Kieselsäuresekunärteilchen aus den Kieselsäureprimärteilchen. Diese Reaktionszeit, die zum Beispiel von der Temperatur, aber auch von der chemischen Zusammensetzung des zu filtrierenden Getränkes bestimmt wird, muß bei dem erfindungsgemäßen Verfahren berücksichtigt werden. Sie liegt gewöhnlich in der Größenordnung von einigen Minuten. Längere Reaktiorszeiten stören aber nicht.

Es kommt nur darauf an, daß die aus dem Kieselsol entstehenden SiO₂-Sekundärteilchen zu einer gewissen Größe angewachsen sind, damit sie im Filtermedium zurückgehalten werden, damit sie die Filterporen verkleinern. So erreicht man, daß auch feinteilige Trübungsbestandteile des Bieres im Filtermedium festgehalten werden.

Wesentlich für das erfindungsgemäße Verfahren ist, daß im Gegensatz zum Stand der Technik die Kieselsäureausflockung nicht entfernt wird, sondern dazu dient, bei der Filtrierung des Getränks im Filter entsprechend der erfindungsgemäßen Aufgabe die Filterporen zu verkleinern.

Hierzu ist es insbesondere erforderlich, daß das Kieselsol nur in geringer Menge eingesetzt wird. Im allgemeinen wird das Kieselsol in einer Menge (berechnet als SiO₂) von 0,5-20g SiO₂ / hl Flüssigkeit (5-200 ppm), vorzugsweise von 1-10 g/hl (10-100 ppm) und insbesondere von 2-8 g/hl (20-80 ppm) verwendet.

Das Verhältnis der Kieselsolmenge zum Filtermedium, wie es insbesondere bei der Anschwemmfiltration von Bedeutung ist, läßt sich nach den Gegebenheiten des Falles, insbesondere der Art des Filtermaterials, vom Fachmann leicht ermitteln.

Ist die Kieselsolmenge zu hoch, besteht die Gefahr, daß die Poren des Filters völlig verstopfen, ist die Menge zu gering, kann die angestrebte Wirkung ungenügend sein.

Das erfindungsgemäße Verfahren erlaubt vor allem die Anwendung solcher Filtermedien in der Getränkeindustrie, die an sich eine zu grobe Porenstruktur haben, um eine Feinfiltration zu gewährleisten, wie die schon oben erwähnten Cellulosefasern, Stärke, Kieselsäurehydrogele, pulver- oder faserförmige Kunststoffprodukte u.ä..

Um eine gleichmäßige Verdichtung des Filters sicherzustellen, soll die Kieselsäureausflockung im Gegensatz zu den Verfahren des Standes der Technik sich nicht absetzen, sondern gleichmäßig im zu filtrierenden Getränk verteilt sein.

Es kann notwendig sein, Hefe und grobe Trubstoffe aus dem Getränk zu entfernen, bevor die Kieselsolzugabe erfolgt. Dies kann durch Anwendung einer Zentrifuge erfolgen. Von Bedeutung ist dieser Verfahrensschritt vor allem dann, wenn das benutzte Filtermedium regeneriert werden soll.

Das erfindungsgemäße Verfahren kann aber auch durchgeführt werden, indem man das Kieselsol in den Bierstrom dosiert. Dann ist es erforderlich, die benötigte Reaktionszeit gegebenenfalls durch Zwischenschalten eines Puffertankes zwischen Kieselsoldosierung und Filter sicherzustellen. Arbeitet man ohne Puffertank, dann ist es zweckmäßig, den Filter zunächst auf Zirkulation zu schalten. Man erkennt dann an der Abnahme des Trübungswertes des Filtrates, ob die erforderliche Verdichtung der Poren stattgefunden hat.

In einer vorteilhaften Ausgestaltung der vorliegenden Erfindung wird dem Getränk zusätzlich zum Kieselsol wässrige Gelatinelösung zugesetzt. Damit erreicht man eine raschere Ausbildung des Kieselsäurenniederschlages und auch eine Beeinflussung der Flockengröße der Ausfällung. Anstelle einer wässrigen Gelatinelösung kann auch eine wässrige Lösung von Polyvinylpyrrolidon (PVP) als Flockungshilfsmittel benutzt werden.

Vorzugsweise kann mit Aluminiumverbindungen modifiziertes Kieselsol zugegeben werden.

Das Filtermedium kann aus Kieselgur, Cellulose, Stärke, Kieselgel und/oder feinpulverigen oder faserförmigen, wasserunlöslichen Polymeren bestehen.

Das erfindungsgemäße Verfahren unterscheidet sich von den vorbekannten Prozessen auch dadurch, daß es auf das Eintreten oder Ausbleiben von Adsorptionsvorgängen an den aus Kieselsol entstehenden SiO₂-Ausfällungen überhaupt keine Rücksicht nimmt. Es genügt, wenn nach der Zugabe des Kieselsols zu Bier oder anderen Getränken eine Ausfällung von SiO₂-Sekundärstrukturen stattfindet, die in den Poren eines Filtermediums festgehalten wird. Dadurch lassen sich die Poren des Filtermediums so verkleinern, daß alle Trübungspartikel, die größer sind als die Poren zurückgehalten werden, unabhängig von Adsorptionsvorgängen.

Unter Kieselsol im Sinne der vorliegenden Erfindung sind bevorzugt solche stabilisierte Kieselsole zu verstehen, die nach einem der drei folgenden Verfahren hergestellt werden:
a) Entalkalisierung von Wasserglas und Stabilisierung der alkaliarmen Lösung durch chemische Prozesse;
b) Peptisierung von Kieselgelen durch geeignete Prozesse, z.B. durch Erhitzen im Autokalven mit geringen Alkalimengen;
c) Redispergieren von geeigneten Kieselsäuren in Wasser, z.B. pyrogenen Kieselsäuren.

Die Verfahren sind in Ullmann, Band 21, 1981, beschrieben. Die Stabilisierung der Kieselsole kann erfolgen beispielsweise durch Zugabe kontrollierter Mengen von Natriumhydroxid oder anderer basischer Stoffe.

Die Durchführung der Erfindung ist in den nachfolgenden Ausführungsbeispielen 1 bis 6 erläutert.

### Beispiel 1

Bier, das nach zweiwöchiger Lagerung bei o° C im zylindrokonischen Tank durch Kieselgurfiltration nicht klarer als 2 EBC-Einheiten filtriert werden kann, wild folgendermaßen behandelt: Zunächst wird das Hefesediment aus dem Konus des zylindrokonischen Tanks (Inhalt 960 hl, Tankhöhe 10 m) entfernt. Sodann werden 14,4 l 30%iges Kieselsol, mit einer spezifischen Oberfläche von 300 m²/g verdünnt mit ca. 20 l Wasser durch die Reinigungsköpfe von oben in den Tank eingeführt (14,4 l Kieselsol 30%-ig = 5,18 kg SiO₂/960 hl = 5,4 g/hl = 54 ppm). Nach 24 Std. wird vor Beginn der Filtration durch kurzes Einblasen von Kohlensäure in den Tankkonus für gleichmäßige Durchmischung des Kieselsäureniederschlages gesorgt. Anschließend wird kieselgurfiltriert. Das Filtrat hat von Beginn an 0,6, später dann 0,4 EBC-Einheiten. Der Druckanstieg beträgt 0,2 bar pro Stunde, ist also "normal".

### Beispiel 2

Bei der großtechnischen Filtration in einer Brauerei zeigt es sich, daß Bier trotz Anwendung der feinsten zur Verfügung stehenden Kieselgur (Filterzell^{®}) nicht klar zu filtrieren ist. Das Bier weist eine Trübung von 5 EBC-Einheiten nach der Filtration auf. In das Dosierungsgefäß werden zu der wässrigen Kieselgur-Suspension so viel 30prozentige, aluminium-modifizierte Kieselsollösung mit einer spezifischen Oberfläche von 300 m²/g gegeben, daß zusätzlich zur eingestellten Kieselgurdosierung von 100 Gramm pro Hektoliter zusätzlich 20 Milliliter Kieselsol, das heißt 7,2 Gramm SiO2 pro Hektoliter dosiert werden. Nach 35 Minuten beginnt die Trübungsanzeige nach dem Filter spontan zu sinken. Sie stellt sich auf 0,5 EBC-Einheiten ein und bleibt auf diesem Wert. Der Druckanstieg im Filter erhöht sich geringfügig um 0,1 bar pro Stunde.

### Beispiel 3

Es wird ein Kleinversuch durchgeführt, bei dem unfiltriertes Vollbier aus einer Münchner Brauerei mit verschiedenen Filterhilfsstoffen der Anschwemmfiltration im Labormaßstab unterworfen wird. Bei diesem Versuch wird die Filtrationsdauer für bestimmte Filtratvolumina ermittelt und daraus ein Filterfaktor errechnet, der ein Maß für die Filtrationsgeschwindigkeit darstellt.* Außerdem wird die Klarheit des Filtrats bestimmt.
* K. Raible und H. Bantleon, Monatszeitschrift für Brauerei 1968, S. 277-285

Als Filterhilfsmittel dienen die sehr fein filtrierende Kieselgur Filtercel^{®} der Firma Manville, dazu im Vergleich ein pulverförmiges PVPP-Produkt. Da dieses PVPP-Produkt keine scharfe Filtration ermöglicht, wird bei weiteren Parallelversuchen 10 ml/hl und 20 ml/hl Kieselsol mitdosiert. Das Kieselsol hat eine spezifische Oberfläche von 100 m²/g und 30 Gew.% SiO2.

Die bei dem Versuch erhaltenen Resultate sind in der Tabelle zusammengestellt.

| Dosierung | Filterfaktor | Trübung des Filtrates (EBC-Einheit) |
|---|---|---|
| 100 g/hl Filtercel^{®} | 1,40 | 0,6 |
| 100 g/hl PVPP | 0,12 | 1,8 |
| 100 g/hl PVPP + 10 ml/hl Kieselsol | 0,28 | 1,1 |
| 100 g/hl PVPP + 20 ml/hl Kieselsol | 0,70 | 0,75 |
| 100 g/hl PVPP + 20 ml/hl Kieselsol 1 Std. Reaktionszeit | 0,42 | 0,65 |

Aus dieser Tabelle zeigt sich zunächst, daß die scharf filtrierende Kieselgur einen Filterfaktor von 1,40 ergibt und ein Filtrat mit 0, 6 EBC-Einheiten Trübung. Im Vergleich dazu erhält man bei der Dosage des PVPP-Pulvers einen Filterfaktor von 0,12. Dieses PVPP-Pulver erlaubt also mehr als die 10fache Filtrationsgeschwindigkeit. Es hat aber den Nachteil, daß es nicht scharf filtriert, denn das Filtrat weist eine EBC-Trübung von 1,8 Einheiten auf. Wird zusätzlich zum PVPP-Pulver 10 ml/hl Kieselsol dosiert, dann verdichtet sich der Filter deutlich (Filterfaktor 0,28) und erbringt gleichzeitig auch ein klareres Filtrat mit 1,1 EBC-Einheiten, das allerdings noch nicht die Klarheit des Filtercel^{®}-Filtrates hat. Erhöhung der Kieselsol-Dosage auf 20 ml/hl erhöht den Filterfaktor weiter und bringt gleichzeitig auch eine Verbesserung der Klarheit. Im letzten Versuch schließlich wurde nach der Zugabe des PVPP und von 20 ml/hl Kieselsol eine Reaktionszeit von 1 Std. eingeschaltet, ehe die Filtration vorgenommen wurde. Hier zeigt sich nun, daß die verlängerte Reaktionszeit die Filtrationsschärfe deutlich erhöht und dies bei gleichzeitiger Verminderung des Filterfaktors, d.h. Verbesserung der Filtrationsrate gegenüber dem Versuch mit gleicher Dosage aber ohne Reaktionszeit.

Der vorstehende Versuch zeigt, wie durch die erfindungsgemäße Anwendung von Kieselsol zur Verdichtung des Filterkuchens die Möglichkeit geschaffen wird, ein an sich nur für die Eiweißstabilisierung, nicht aber für die Feinfiltration von Bier konzipiertes Adsorptionsmittel auch zu einem vollwertigen Filterhilfsmittel zu machen. Nach der Filtration wird das PVPP mit verdünnter Natronlauge von den adsorbierten polyphenolischen Verbindungen freigewaschen. Bei dieser Gelegenheit geht die geringe Menge an Kieselsäure, die aus dem Kieselsol sich im Filterkuchen abgelagert ha t, in Lösung und wird aus dem PVPP-Pulver wieder entfernt. Das PVPP kann erneut für die Filtration und Stabilisierung eingesetzt werden.

Ein feinpulveriges Polyamidprodukt erbrachte im Prinzip ähnliche Ergebnisse.

### Beispiel 4

Es wird ein Laborversuch durchgeführt unter gleichen Versuchsbedingungen wie bei Beispiel 3. Verglichen werden die Filtrationseigenschaften von Kartoffelstärke bei gleichzeitiger Mitdosierung von 10 ml/hl Kieselsol. Die Resultate dieses Versuches sind in der Tabelle zusammengestellt:

| Dosierung | Filterfaktor | Trübung des Filtrates (EBC-Einheit) |
|---|---|---|
| 100 g/hl Filtercel^{®} | 1,15 | 0,60 |
| 100 g/hl Stärke | 0,45 | 1,9 |
| 100 g/hl Stärke + 10 ml/hl Kieselsol | 0,88 | 0,75 |
| 100 g/hl Stärke + 10 ml/hl Kieselsol 1 Std. Reaktionszeit | 0,65 | 0,60 |

Hier sieht man, daß die scharf filtrierende Kieselgur Filtercel^{®} einen Filterfaktor von 1,15 ergibt und eine Klarheit des Filtrates von 0,60 EBC-Einheiten. Unter gleichen Versuchsbedingungen erbringt die Filtration mit feinpulvriger Kartoffelstärke einen Filterfaktor von 0,45. Das Bier ist also unter sonst gleichen Versuchsbedingungen mit Stärke dreimal so schnell filtrierbar wie mit Filtercel^{®}. Aber die Klarheit des Filtrates mit 1,9 ESC-Einheiten schließt die Verwendung der Stärke als Filterhilfsmittel aus. Durch Mitdosierung von 10 ml/hl Kieselsol läßt sich der Filterkuchen verdichten, so daß er dann auch ein Filtrat mit 0,75 EBC-Einheiten erbringt, d.h. fast schon die Filtrationsschärfe der Kieselgur-Filtercel^{®} bei jedoch deutlich verbessertem Filterdurchsatz. Wird die Dosierung der Filterhilfsmittel vorverlegt, so daß zwischen Dosierung und Filtration eine Reaktionszeit von 1 Std. entsteht, dann führt dies zu einer weiteren Verbesserung der Filtrationsschärfe bei gleichzeitiger Erhöhung des Filterdurchsatzes. Bei diesem Versuch kann also mit Stärke und Kieselsol fast doppelt so schnell filtriert werden wie mit der Kieselgur Filtercel^{®} bei gleicher Klarheit des erzielten Filtrates.

Nach der Filtration kann die Stärke verfüttert werden. Aus 10 ml/hl 30 %igem Kieselsol gelangen in 100 g Stärke 3,6 g Si02. Nachdem die verbrauchte Filtrationsstärke ohnehin mit den Biertrebern zusammen verfüttert wird, ist der geringe Kieselsäureanteil ernährungsphysiologisch unbedeutend, darüber hinaus aber bei der Futtermittelanalyse nicht nachweisbar.

Ähnliche Resultate brachten Kleinversuche, bei denen anstelle von Stärke Cellulosefasern eingesetzt wurden.

### Beispiel 5

Kleinversuch mit unfiltriertem Vollbier aus einer Münchner Brauerei wie bei den Beispielen 3 und 4.

Es wird die Eignung von Polyacrylnitril-Hohlfaser als Hilfsmittel für die Bierfiltration geprüft. Zur Verfügung steht ein Versuchsprodukt dtex 2,2 0,6mm. Die Länge der Einzelfaser beträgt 0,6 mm, der Außendurchmesser der Hohlfaser ca. 20 µm. Das polyacrylnitril ist beständig gegenüber verdünnter Lauge und Säure, könnte also als regenerierbares Filterhilfsmittel in Betracht kommen.

Beim Versuch wird das Bier mit 100 g/hl Kieselgur Filtercel^{®} filtriert und im Vergleich dazu mit 100 g/hl der Polyacrylnitrilfaser. In einem weiteren Versuch schließlich wird mit der Kunststoffaser auch 20 ml/hl 30 %iges Kieselsol, spezifische Oberfläche 100 m²/g SiO2, mit dem Bier in Kontakt gebracht und nach einer Reaktionszeit von 1 Std. filtriert. Die Ergebnisse sind in der folgenden Tabelle enthalten:

| Dosierung | Filterfaktor | Trübung des Filtrates (EBC-Einheit) |
|---|---|---|
| 100 g/hl Filtercel^{®} | 1,10 | 0,7 |
| 100 g/hl Polyacrylnitrilfaser | 0,62 | 1,7 |
| 100 g/hl Polyacrylnitrilfaser + 20 ml/hl Kieselsol | 0,92 | 0,75 |

Auch bei diesem Versuch konnte durch die Anwendung von Kieselsol der Filterkuchen aus Polyacrylnitrilfaser verdichtet werden, so daß ein klares Filtrat resultierte, das fast die Brillanz des Filtercel^{®}-Filtrats erreichte.

Der Vorteil der Anwendung der Kunststoffaser liegt gegenüber der Filtration mit Kieselgur darin, daß die Kunststoffaser mit verdünnter Natronlauge gewaschen und nach Ausspülung der Lauge erneut zur Filtration benutzt werden kann.

### Beispiel 6

Kleinversuch mit unfiltriertem Vollbier aus einer Münchner Brauerei wie bei den Beispielen 3 - 5.

Das Versuchsbier wird auf 0° C gekühlt, anschließend wird die Kleinfiltration durchgeführt. Zur Anwendung kommen als Dosierung:
1) 100 g/hl Kieselgur "Filtercel"^{®}
2) 100 g/hl Kieselsäurehydrogel "Lucilite"^{®}
3) 100 g/hl Kieselsäurehydrogel "Lucilite"^{®} + 3,6 g/hl Si02 als Kieselsol mit einer spez. Oberfläche von 300 m²/g
4) 100 g/hl Kieselsäurehydrogel "Lucilite"^{®} + 3,6 g/hl Si02 als Kieselsol mit einer spez. Oberfläche von 100 m²/g

Bei Versuch Nr. 3 und 4 wird zwischen der Zugabe des Kieselsols und der Durchführung der Filtration eine Reaktionszeit von 1 Std. eingehalten.

Der Filtrationsversuch erbringt folgende Ergebnisse:

| Dosierung | Filterfaktor | Trübung des Filtrates (EBC-Einheit) | Kältetrübung nach 1 Warmtag 40° C |
|---|---|---|---|
| 100 g/hl Kieselgurfiltercel^{®} | 1,25 | 0,7 | 0,95 |
| 100 g/hl Kieselsäurehydrogel "Lucilite"^{®} | 0,25 | 1,25 | 0,6 |
| 100 g/hl Kieselsäurehydrogel "Lucilite"^{®} + 3,6 g/hl Si02 als Kieselsol (300 m²/g) | 1,10 | 0,7 | 0 |
| 100 g/hl Kieselsäurehydrogel "Lucilite"^{®} + 3,6 g/hl Si02 als Kieselsol (100 m²/g) | 0,35 | 0,9 | 0,2 |

Der vorliegende Versuch zeigt, daß das Hydrogel "Lucilite"^{®} rund fünfmal so schnell filtriert wie die feinfiltrierende Kieselgur Filtercel^{®} Aber das Filtrat ist nicht klar, es hat 1,25 EBC-Einheiten. Wird zusätzlich mit dem Hydrogel auch Kieselsol mit 300 m²/g Oberfläche dosiert, dann nähert sich der Filterfaktor dem der Kieselgur Filtercel^{®}. Die Filtration wird also stark verlangsamt. Dafür aber erreicht man ein Filtrat, das genau so klar ist wie bei Filtercel^{®}.

Das Kieselsol mit 100 m²/g spez. Oberfläche verdichtet den Lucilite^{®}-filterkuchen nur relativ wenig, denn der Filterkuchenfaktor erhöht sich nur von 0,25 auf 0,35. Trotzdem aber ist eine deutliche Verbesserung der Klarheit des Filtrates festzustellen.

Bei dem kurzen Forciertest mit 1 Warmtag 40° C findet man, daß das Filtrat von Filtercel^{®} eine Kältetrübung von 0,95 EBC aufweist. Das Filtrat mit Lucilite^{®} ist etwas besser, hat aber immer noch 0,6 EBC-Einheiten Kältetrübung, dagegen bleibt das Filtrat der Kombination Lucilite^{®}/Kieselsol 300 m²/g völlig blank. Das Kieselsol mit 100 m²/g spez. Oberfläche ist nicht ganz so wirkungsvoll.

## Patentansprüche

1. Verfahren zur Verkleinerung der Poren eines Filtermediums für Getränke, vorzugsweise Bier, wobei dem zu filtrierenden Getränk bei kontinuierlicher Prozeßführung stromaufwärts des vom Getränk durchströmten Filtermediums oder in einem Chargenprozeß dem in einem Tank befindlichen Getränk ein stabilisiertes Kieselsol in einer solchen Menge und derart gesteuert zugesetzt wird, daß die Kieselsäureausfällung, also der Übergang von SiO₂-Primärteilchen in SiO₂-Sekundärteilchen, stattgefunden hat, bevor das Getränk das Filtermedium verlassen hat, und die entstandene Kieselsäureausfällung die Poren verkleinert, ohne sie zu verschließen, wobei für eine gleichmäßige Verteilung der Kieselsäureausfällung im zu filtrierenden Getränk gesorgt wird.

2. Verfahren nach Anspruch 1, dadurch gekennzeichnet, daß die vorgesehene Menge Kieselsol dem Getränk in einem Lagertank vor der Filtration, vorzugsweise einige Stunden vor der Filtration, zugefügt wird.

3. Verfahren nach Anspruch 2, dadurch gekennzeichnet, daß dem Getränk im Lagertank ein Gas, vorzugsweise Kohlensäure, eingeblasen wird.

4. Verfahren nach einem der vorhergehenden Ansprüche, dadurch gekennzeichnet, daß eine Teilmenge des zu filtrierenden Getränks mit dem Kieselsol versetzt wird, daß darin die Ausbildung der Ausflockung abgewartet und gleichmäßig verteilt gehalten wird und daß die Teilmenge dann mit dem übrigen zu filtrierenden Getränk vorzugsweise unmittelbar vor dem Filter vermischt wird.

5. Verfahren nach einem der vorhergehenden Ansprüche, dadurch gekennzeichnet, daß Hefe und grobe Trübstoffe vor der Kieselsolzugabe aus dem Getränk entfernt werden, vorzugsweise durch Anwendung einer Zentrifuge.

6. Verfahren nach Anspruch 1, dadurch gekennzeichnet, daß der Filter auf Zirkulation geschaltet wird, so daß das Getränk den Filter wiederholt durchströmt, bis die erforderliche Verengung der Poren des Filters stattgefunden hat.

7. Verfahren nach Anspruch 6, dadurch gekennzeichnet, daß zwischen Kieselsoldosierung und Filter ein Puffertank zwischengeschaltet wird.

8. Verfahren nach einem der vorhergehenden Ansprüche, dadurch gekennzeichnet, daß dem Getränk zusätzlich zum Kieselsol wässrige Gelatinelösung oder eine wässrige Lösung von Polyvinylpyrrolidon (PVP) als Flockungsmittel zugesetzt wird.

9. Verfahren nach einem der vorhergehenden Ansprüche, dadurch gekennzeichnet, daß mit Aluminiumverbindungen modifiziertes Kieselsol zugegeben wird.

10. Verfahren nach einem der vorhergehenden Ansprüche, dadurch gekennzeichnet, daß das Kieselsol, berechnet als SiO₂, in einer Menge von 0,5-20 g SiO₂ /hl Flüssigkeit, vorzugsweise 1-10 g und insbesondere 2-8 g SiO₂ /hl Flüssigkeit, zugesetzt wird.

11. Verfahren nach einem der vorhergehenden Ansprüche, dadurch gekennzeichnet, daß das Filtermedium aus Kieselgur, Zellulose, Zellulosefasern, Stärke, Kieselgel, Kieselsäurehydrogelen, pulver- oder faserförmigen Kunststoffprodukten und/oder feinpulverigen oder faserförmigen, wasserunlöslichen Polymeren besteht.

## Claims

1. Process for reducing the size of the pores of a filter medium for beverages, preferably beer, where a stabilized silica sol is added to the drink to be filtered, while conducting the process continuously, upstream of the filter medium perfused by the beverage, or is added to the beverage located in a tank in a batch process, in such a quantity and controlled in such a manner that the silicic acid precipitation, that is the conversion of SiO₂ primary particles into SiO₂ secondary particles, has taken place before the beverage has left the filter medium, and the resulting silicic acid precipitate reduces the size of the pores without occluding them, care being taken to ensure a uniform distribution of the silicic acid precipitate in the beverage to be filtered.

2. Process according to Claim 1, characterized in that the planned quantity of silica sol is added to the beverage in a storage tank prior to the filtration, preferably some hours prior to the filtration.

3. Process according to Claim 2, characterized in that a gas, preferably carbon dioxide, is bubbled through the beverage in the storage tank.

4. Process according to one of the preceding claims, characterized in that the silica sol is added to a portion of the beverage to be filtered, in that the formation of the flocculation in the beverage is awaited and is kept uniformly distributed, and in that the portion is then mixed with the remainder of the beverage to be filtered, preferably directly prior to the filter.

5. Process according to one of the preceding claims, characterized in that yeast and coarse turbidifying solids are removed from the beverage, preferably by using a centrifuge, prior to adding the silica sol.

6. Process according to Claim 1, characterized in that the filter is switched to circulation so that the beverage perfuses the filter repeatedly until the requisite narrowing of the pores of the filter has taken place.

7. Process according to Claim 6, characterized in that a buffer tank is interpolated between the point of metering in the silica sol and the filter.

8. Process according to one of the preceding claims, characterized in that, in addition to the silica sol, aqueous gelatin solution or an aqueous solution of polyvinylpyrrolidone (PVP) is added as flocculant to the beverage.

9. Process according to one of the preceding claims, characterized in that silica sol which is modified with aluminium compounds is added.

10. Process according to one of the preceding claims, characterized in that the silica sol, calculated as SiO₂, is added in a quantity of 0.5-20 g of SiO₂/100 l of liquid, preferably 1-10 g and in particular 2-8 g of SiO₂/100 l of liquid.

11. Process according to one of the preceding claims, characterized in that the filter medium consists of kieselguhr, cellulose, cellulose fibres, starch, silica gel, silicic acid hydrogels, powdery or fibrous synthetic products, and/or pulverulent or fibrous water-insoluble polymers.

## Revendications

1. Procédé de diminution de la taille des pores d'un agent filtrant pour boissons, de préférence de la bière, un sol silicieux étant ajouté à la boisson à filtrer, dans le cas où l'on fonctionne avec un processus continu, en amont de l'agent filtrant parcouru par l'écoulement de boissons ou bien, dans le cas ou l'ont fonctionne avec un processus par charge, est ajouté à la boisson se trouvant dans un réservoir, ce sol silicieux étant ajouté, en une quantité telle, et de façon commandée de telle façon, que la précipitation d'acide silicique, donc la transformation des particules primaires de SiO₂ en particules secondaires de SiO₂ a eu lieu avant que la boisson ait quitté l'agent filtrant, et la précipitation d'acide silicique s'étant effectuée produisant une diminution des pores sans les obturer, en veillant à assurer une distribution homogène de la précipitation d'acide silicique dans la boisson à filtrer.

2. Procédé selon la revendication 1, caractérisé en ce que la quantité prévue de sol silicieux est ajoutée à la boisson dans un réservoir de stockage, avant filtration, de préférence, quelques heures avant filtration.

3. Procédé selon la revendication 2, caractérisé en ce que l'ont insuffle dans la boisson située dans le réservoir de stockage un gaz, de préférence, de l'oxyde de carbone.

4. Procédé selon l'une des revendications précédentes, caractérisé en ce qu'on mélange une quantité partielle de la boisson à filtrer avec le gel silicieux, on attend que se produise une floculation et l'ont maintient une distribution homogène, et en ce que la quantité partielle est alors mélangée au reste de la boisson à filtrer, de préférence directement avant filtration.

5. Procédé selon l'une des revendications précédentes caractérisé en ce que les levures et les pulpes sont éliminées de la boisson avant l'addition de sol silicieux, de préférence par utilisation d'une centrifugeuse.

6. Procédé selon la revendication 1, caractérisé en ce que le filtre est soumis à circulation, de manière que la boisson traverse de manière répétitive le filtre, jusqu'à que se soit produit le rétrécissement nécessaire des pores du filtre.

7. Procédé selon la revendication 6, caractérisé en ce qu'un récipient tampon est mis en circuit, entre l'addition dosée de sol silicieux et le filtre.

8. Procédé selon l'une des revendications précédentes, caractérisé en ce que l'on ajoute à la boisson en plus du sol silicieux une solution aqueuse de gélatine ou une solution aqueuse de polyvinyle pyrrolydon (PVP), à titre d'agent de floculation.

9. Procédé selon l'une des revendications précédentes caractérisé en ce que le produit ajouté est un sol silicieux, modifié avec des composés aluminés.

10. Procédé selon l'une des revendications précédentes caractérisé en ce que le sol silicieux, exprimé sous forme de SiO₂, et ajouté en une quantité de 0,5 à 20 g de SiO₂/hl de liquide, de préférence de 1 à 10 g et en particulier de 2 à 8 g de SiO₂ /hl de liquide.

11. Procédé selon l'une des revendications précédentes caractérisé en ce que l'agent filtrant est composé de terre d'infusoires, de cellulose, de fibres de cellulose, d'amidon, de gel de silice, d'hydrogels d'acide silicique, de produit synthétique pulvérulents ou fibreux et/ou de polymères finement pulvérisés ou fibreux, insolubles dans l'eau.
